# EUROPÄISCHE PATENTANMELDUNG

(11) **EP 3 872 954 A1**
(43) Veröffentlichungstag der Anmeldung: **01.09.2021**
(21) Anmeldenummer: 21159738.0
(22) Anmeldetag: 26.02.2021
(51) Int. Cl.: H02J 7/00, H02J 13/00, B60L 53/63, B60L 53/67, B60L 53/68

(54) **LASTMANAGEMENT**

(30) Priorität: 26.02.2020 DE 102020104992
(71) Anmelder: Kerzendorf, Jörg, 63683 Ortenberg (DE); Hänsel, Martin, 63683 Ortenberg (DE)
(72) Erfinder: Kerzendorf, Jörg, 63683 Ortenberg (DE); Hänsel, Martin, 63683 Ortenberg (DE)
(74) Vertreter: Patentanwaltzkanzlei Hutzelmann

(57) **Zusammenfassung**

Verfahren zum Steuern des Lastmanagements (1) von elektrischen Verbrauchern, insbesondere von Ladesäulen (2) für Elektrofahrzeuge, wobei die jeweilige Last des Verbrauchers bzw. die zur Verfügung stehende Ladeleistung durch ein Lastmanagement (1) geregelt wird.

## Beschreibung

Die Erfindung bezieht sich auf ein Verfahren zum Steuern des Lastmanagements von elektrischen Verbrauchern, insbesondere von Ladesäulen für Elektrofahrzeuge.

Bislang wurde ein Lastmanagement, wenn überhaupt, allenfalls lokal realisiert. Dieses Lastmanagement ist jedoch proprietär. Unterschiedliche Verbraucher bzw. Ladesäulen können nicht miteinander kommunizieren und so ist ein Lastmanagement über mehrere Verbrauchsstellen hinweg nicht möglich.

Aufgabe der Erfindung ist es, ein Verfahren zum Steuern des Lastmanagements vorzuschlagen, welches nicht nur lokal, sondern auch innerhalb eines Standortes und auch standortübergreifend realisierbar ist.

Diese Aufgabe wird erfindungsgemäß dadurch gelöst, daß die jeweilige Last des Verbrauchers bzw. die zur Verfügung stehende Ladeleistung durch ein Lastmanagement geregelt wird.

Dies ist Grundvoraussetzung des Verfahrens. Erst dadurch lässt sich ein effektives Lastmanagement betreiben.

Dabei hat es sich als sehr vorteilhaft erwiesen, wenn das Lastmanagement im jeweiligen Verbraucher bzw. der jeweiligen Ladesäule vorgesehen ist.

Damit lässt sich die jeweilige Last regeln.

Äußerst vorteilhaft ist es erfindungsgemäß auch, wenn bei mehreren Verbrauchern bzw. Ladesäulen ein übergeordnetes Lastmanagement vorgesehen ist.

Dadurch lassen sich auch mehrere Verbraucher bzw. Ladesäulen aufeinander abstimmen. Die Gesamtlast wird geregelt und an die verfügbare Leistung angepasst. Bei Stromüberangebot kann auch die Last erhöht werden. Der Einsatz von Stromspeichern als separate Einheiten oder auch die Nutzung von Elektrofahrzeugen als Speicher ist denkbar.

Weiterhin hat es sich als sehr vorteilhaft erwiesen, wenn ein herstellerunabhängiges offenes Kommunikationsprotokoll zur Kommunikation zwischen Verbraucher bzw. Ladesäule mit weiteren Verbrauchern bzw. Ladesäulen und/oder mit dem übergeordneten Lastmanagement vorgesehen ist.

Hierdurch lassen sich herstellerübergreifend Verbraucher und/oder Ladesäulen mit einem gemeinsamen Lastmanagement versehen. Als offenes Kommunikationsprotokoll kann beispielsweise das OCPP (Open Charge Point Protocol) eingesetzt werden.

Sehr vorteilhaft ist es gemäß einer Weiterbildung der Erfindung auch, wenn eine Kommunikation zwischen Ladesäule und einem Verwaltungssystem (Backendsystem) vorgesehen ist.

Damit können nicht nur Abrechnungs- und Verbrauchsdaten kommuniziert werden, sondern auch Daten des Lastmanagements übertragen werden.

Dabei hat es sich als sehr vorteilhaft erwiesen, wenn eine Kommunikationsschnittstelle (Proxy) zur Kommunikation der Ladesäulen mit dem Verwaltungssystem (Backendsystem) vorgesehen ist.

Durch eine solche Kommunikationsschnittstelle wird nicht nur die Datenkommunikation nach extern reduziert bzw. gesteuert, sondern werden auch mehrere an einem Punkt gelegene Verbraucher bzw. Ladestationen gemeinsam zugänglich gemacht.

Ebenfalls sehr vorteilhaft ist es dabei, wenn in der Kommunikationsschnittstelle oder auf der Kommunikationsschnittstellen-Hardware ein Lastmanagement vorgesehen ist.

Hierdurch wird ein zentrales Lastmanagement für einen Verbrauchspunkt auch mit mehreren Verbrauchern bzw. Ladesäulen ermöglicht. Zudem kann das Lastmanagement auch von außen erreicht, gesteuert bzw. abgefragt werden und kann so auch auf externe Einflüsse reagieren. Dabei kann das Lastmanagement im selben Software-Paket wie die Kommunikationsschnittstelle oder als getrenntes Softwarepaket auf derselben Hardware realisiert sein.

Äußerst vorteilhaft ist es erfindungsgemäß auch, wenn eine Lastmanagement-Kommunikationsschnittstelle vorgesehen ist.

Ein solches Lastmanagement kann dabei ein lokales Lastmanagement an einem Verbrauchspunkt darstellen, kann die Kommunikation mit einem übergeordneten Lastmanagement, aber auch mit untergeordnetem Lastmanagement übernehmen. Zudem kann die Lastmanagement-Kommunikationsschnittstelle mit einer Zugriffs-Kommunikationsschnittstelle kombiniert oder separat aufgebaut sein. Räumliche Nähe bietet sich an.

Eine weitere sehr vorteilhafte Weiterbildung der Erfindung liegt vor, wenn eine Kommunikation zwischen Lastmanagement-Kommunikationsschnittstelle und Netzbetreiber bzw. Verteilnetzbetreiber vorgesehen ist.

Damit werden dem jeweiligen Netzbetreiber bzw. Verteilnetzbetreiber Möglichkeiten zur Regelung der Last eingeräumt.

Gemäß einer Fortbildung der Erfindung hat es sich als sehr vorteilhaft erwiesen, wenn eine Kommunikation zwischen Lastmanagement-Kommunikationsschnittstelle und Direktvermarkter vorgesehen ist.

Dadurch ergeben sich für Direktvermarkter Regelungsmöglichkeiten. Durch den Anschluß von Lasen und Erzeuger lassen sich virtuelle Kraftwerke und virtuelle Verbraucher schaffen, die entsprechend den Gegebenheiten regelbar sind.

Erfindungsgemäß hat es sich als äußerst vorteilhaft erwiesen, wenn das Lastmanagement über ein offenes Kommunikationsprotokoll, vorzugsweise OCPP (Open Charge Point Protocol) realisiert ist.

Durch die Verwendung eines offenen Kommunikationsprotokolls wird ein herstellerübergreifender Einsatz möglich. Dabei ist es auch denkbar, daß das auf einem Proxy laufende Lastmanagement hinsichtlich seiner Kommunikation mit den einzelnen Verbrauchern bzw. Ladestationen herstellerspezifisch arbeitet und nach außen herstelleroffen ist.

Gemäß einer weiteren Fortbildung der Erfindung ist es auch sehr vorteilhaft, wenn Regeleingriffe des Lastmanagements über einen Bypass-Kanal der Kommunikation zwischen Kommunikationsschnittstelle und Verbrauchern bzw. Ladesäulen und/oder der Kommunikationsschnittstelle mit dem Verwaltungssystem erfolgen.

Hierdruch wird sichergestellt, daß die Regeleingriffe auch tatsächlich zu jedem Zeitpunkt möglich sind und nicht durch andere Datenzugriffe behindert werden. Die Regeleingriffe des Lastmanagement-Systems werden dabei über einen Bypasskanal in die Kommunikation der Kommunikationsschnittstelle mit den Verbrauchern bzw. Ladesäulen und Backend eingeschleust.

Äußerst vorteilhaft ist es gemäß einer Weiterbildung der Erfindung auch, wenn für das Lastmanagement Daten zur Energieerzeugung, zur Auslastung des jeweiligen Netzanschlußpunktes und aller relevanten Verbraucher ausgewertet werden.

Damit kann das Lastmanagement nicht nur lokal, sondern auch global bzw. teilglobal erfolgen und alle relevanten Paramenter berücksichtigen.

Im folgenden wird die Erfindung anhand eines Ausführungsbeispiels veranschaulicht.

Dabei zeigen:

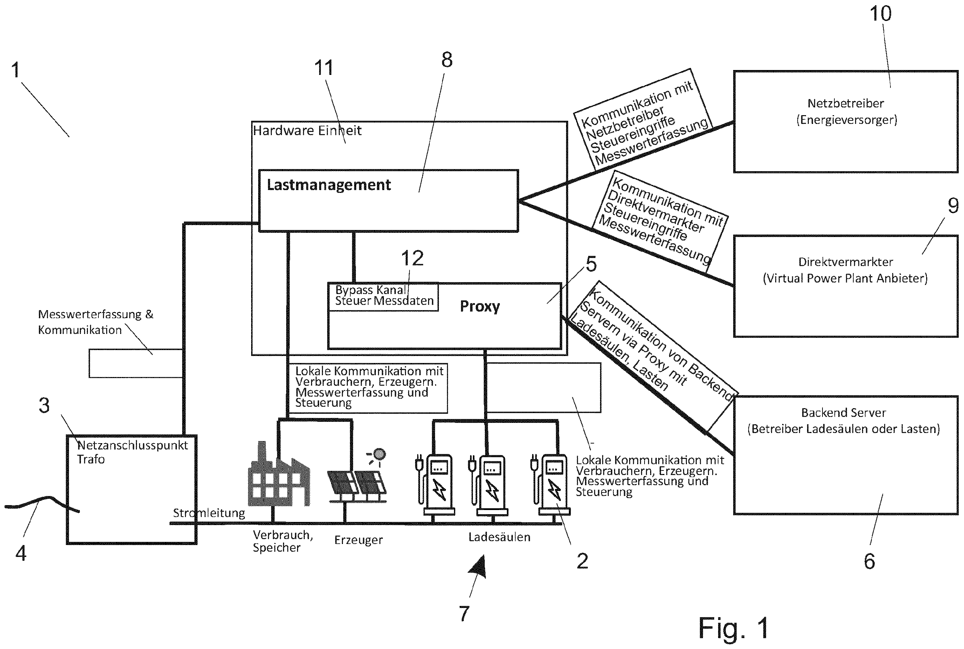

- Fig. 1: eine schematische Darstellung des Aufbaus eines erfindungsgemäßen Verfahrens, und

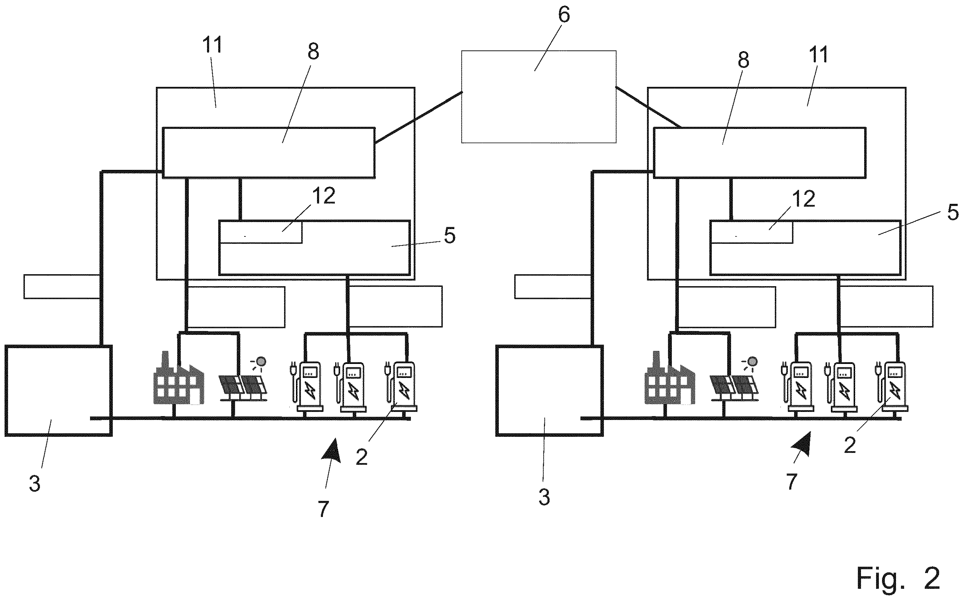

- Fig. 2: eine schematische Darstellung des Aufbaus eines anschlußpunktübergreifenden Verfahrens.

Mit 1 ist in der Figur ein System aus Verbrauchern bzw. Ladesäulen 2, einem Netzanschlußpunkt 3, einem Versorgungsnetz/Verteilnetz 4, einer Kommunikationsschnittstelle 5 und einem Verwaltungssystem 6 bezeichnet.

Gerade bei E-Auto-Ladesäulen 2 vor allem in Ladeparks 7 besteht das Problem, daß daß ein Lastmanagement 8 notwendig ist, damit der Netzanschlußunkt 3 und auch das Verteilnetz 4 nicht überlastet wird. Auf der anderen Seite ist es gewünscht, daß die maximal mögliche Ladeleistung zur Verfügung steht und damit die maximale Netzanschlußleistung des Anschlußpunktes 3 genutzt wird. Dabei muss auch die zur Verfügung stehende Leistung der Stromproduktion berücksichtigt werden. Gerade bei Direktvermarktern 9 ist es wichtig, daß diese die Möglichkeit haben, den ihnen zur Verfügung stehenden Strom abzugeben. Auch hierfür sind explizite Regeleingriffe hinsichtlich Leistung und Strommenge durch die Direktvermarkter 9 notwendig. Aber auch Netzbetreiber 10 haben ein eigenes Interesse an einem übergreifenden Lastmanagement.

Das bedeutet, daß den Ladesäulen 2 nicht mehr Energie zur Verfügung gestellt werden kann, wie im Verteilnetz 4 bzw. dem jeweiligen Direktvermarkter 9 zur Verfügung steht. So kann beispielsweise weiterer Verbrauch berücksichtigt werden oder aber, wenn Solarenergie genutzt wird, die zur Verfügung stehende Last entsprechend der Stromproduktion angepasst werden.

Ladesäulen 2 sind dabei von verschiedensten Herstellern verfügbar.

Meistens sind die Ladesäulen 2 mit einem proprietären Lastmanagement ausgerüstet, welches sich entweder ausschließlich auf die jeweilige Ladesäule 2 bezieht oder allenfalls auf mehrere Ladesäulen 2 eines Herstellers an einem Netzanschlußpunkt 3 bezieht.

Dies ist jedoch problematisch, da ein solches Lastmanagement keine Netzdaten, keine weiteren Verbraucher und auch keine weiteren Ladesäulen 2 eines anderen Herstellers berücksichtigen kann. Zu den Netzdaten gehören Leistungsdaten des jeweiligen Netzanschlußpunktes, der Verteilnetzes, der Stromproduktion, der Hoch- und Mittelspannungsnetze und auch des Handels an der Strombörse.

Ladesäulen 2 eines Ladeparks 7 kommunizieren mit einem Verwaltungssystem 6 um Nutzer zu authorisieren, die Abrechnung der genutzten Ladeleistung bzw. Lademenge usw. zu gewährleisten.

Hierzu ist oftmals eine Kommunikationsschnittstelle 5 vorgesehen, welche dann die gesamte Kommunikation eines Ladeparks 7 bündelt und an das Verwaltungssystem 6 weiterleitet. Hierzu werden oftmals Datenverbindungen über Mobilfunknetze verwendet. Die Kommunikation zwischen den Ladesäulen 2 und dem Verwaltungssystem 6 erfolgt dabei über ein standardisiertes Kommunikationsprotokoll namens OCPP (Open Charge Point Protocol).

Mit Hilfe der vorliegenden Erfindung wird es nun erstmals ermöglicht, daß nicht nur in einem Ladepark 7 Ladesäulen 2 unterschiedlicher Hersteller ein gemeinsames Lastmanagement 8 erhalten, sondern das Lastmanagement auch weitere Verbraucher, Netzdaten und mehrere Ladeparks 7 berücksichtigt.

Hierzu wird ein Lastmanagementmodul 8 beispielsweise auf der Hardware 11 der Kommunikationsschnittstelle 5 eingerichtet, welches über das OCPP Protokoll das Lastmanagement der einzelnen Ladesäulen 2 realisiert. Dazu werden alle relevanten Daten für das Lastmanagement ausgewertet und berücksichtigt und dann über einen Bypasskanal 12 in die Kommunikation zwischen Ladesäule 2 und Verwaltungssystem 6 die Steuereingriffe realisiert.

Das bedeutet, daß jeder Ladepark 7 ein Lastmanagement-Modul 8 erhält, welches entweder auf der Hardware der Kommunikationsschnittstelle oder auch auf gesonderter Hardware läuft. Dieses Lastmanagement-Modul 8 arbeitet dabei als Vermittler für die Kommunikation zwischen Ladesäulen 2 und Verwaltungssystem 6 und kann über einen Bypasskanal Steuereingriffe bezüglich der Ladesäulen 2 vornehmen, welche in die Kommunikation eingebettet werden. Dabei kann der Bypasskanal beispielsweise direkt in die Kommunikation zwischen Verwaltungssystem 6 und Ladesäulen 2 eingebettet werden, aber auch die Einbettung in eine lokale Kommunikationsschnittstelle 5 ist denkbar.

Damit kann durch Nutzung eines standardisierten, eigentlich für die Abrechnung und Authorisierung der Nutzung der Ladesäulen gedachtes Protokoll namens OCPP (Open Charge Point Protocol) ein Lastmanagement der Ladesäulen 2 ohne Berücksichtigung der jeweiligen Hersteller realisiert werden.

Zudem kann ein übergeordnetes Lastmanagement über mehrere Ladeparks durch ein übergeordnetes Modul, welches in Hard- oder Software realisiert sein kann, vorgesehen werden.

So lassen sich nicht nur Daten eines Netzanschlußpunktes 3, sondern auch die Daten mehrerer Ladeparks 7, mehrerer anderer Verbraucher, aber auch Erzeugungsdaten und Netzdaten berücksichtigen und eine optimale Auslastung der Netze, des Netzabschlußpunktes und der Stromproduktion gewährleisten. Dabei werden auch Direktvermarkter berücksichtigt, die beispielsweise an der Strombörse Strom handeln. Diese können so nicht nur Stromerzeugungsanlagen, sonder auch Lasten steuern. Mehrere Stromerzeugungsanlagen werden dabei zu virtuellen Kraftwerken zusammengefasst. Auch Verbraucher wie Ladesäulen 4 lassen sich zu virtuellen Verbrauchern zusammenfassen, so daß die zur Verfügung stehende Gesamtlast und Gesamtstrommenge eingehalten wird.

Zusätzlich kann je nach Auslastung der Ladesäulen 2 die jeweils maximal mögliche Leistung zur Verfügung gestellt werden. Diese ist durch die maximale Leistung des Netzanschlußpunktes 3, durch definierte Netzanschlußbedingungen, durch Lastdaten des Verteilnetzes 4 und auch durch Daten der Stromproduktion definiert.

Vorgegebene Sollwerte können ebenso eingehalten werden, wie auch Vorgaben verschiedenster Richtlinien.

An jeder Ladesäule 2 wird die jeweils mögliche maximale Ladeleistung, definiert durch Lastdaten und Verwaltungssystem zur Verfügung gestellt.

Das erfindungsgemäße Lastmanagement Verfahren setzt auf den bekannten proprietären Verfahren auf und nutzt diese, ermöglicht aber eine herstellerübergreifende Steuerung neben einer örtlich übergreifenden Laststeuerung. Ein Zugang für Direktvermarkter ist gewährleistet.

## Patentansprüche

1. Verfahren zum Steuern des Lastmanagements von elektrischen Verbrauchern, insbesondere von Ladesäulen für Elektrofahrzeuge, **dadurch gekennzeichnet, daß** die jeweilige Last des Verbrauchers bzw. die zur Verfügung stehende Ladeleistung durch ein Lastmanagement geregelt wird.

2. Verfahren nach Anspruch 1, **dadurch gekennzeichnet, daß** das Lastmanagement im jeweiligen Verbraucher bzw. der jeweiligen Ladesäule vorgesehen ist.

3. Verfahren nach Anspruch 1 oder 2, **dadurch gekennzeichnet, daß** bei mehreren Verbrauchern bzw. Ladesäulen ein übergeordnetes Lastmanagement vorgesehen ist.

4. Verfahren nach Anspruch 1, 2 oder 3, **dadurch gekennzeichnet, daß** ein herstellerunabhängiges offenes Kommunikationsprotokoll zur Kommunikation zwischen Verbraucher bzw. Ladesäule mit weiteren Verbrauchern bzw. Ladesäulen und/oder mit dem übergeordneten Lastmanagement vorgesehen ist.

5. Verfahren nach einem der vorangehenden Ansprüche, **dadurch gekennzeichnet, daß** eine Kommunikation zwischen Ladesäule und einem Verwaltungssystem (Backendsystem) vorgesehen ist.

6. Verfahren nach Anspruch 5, **dadurch gekennzeichnet, daß** eine Kommunikationsschnittstelle (Proxy) zur Kommunikation der Ladesäulen mit dem Verwaltungssystem (Backendsystem) vorgesehen ist.

7. Verfahren nach Anspruch 6, **dadurch gekennzeichnet, daß** in der Kommunikationsschnittstelle oder auf der Kommunikationsschnittstellen-Hardware ein Lastmanagement vorgesehen ist.

8. Verfahren nach einem der vorangehenden Ansprüche, **dadurch gekennzeichnet, daß** eine Lastmanagement-Kommunikationsschnittstelle vorgesehen ist.

9. Verfahren nach einem der vorangehenden Ansprüche, **dadurch gekennzeichnet, daß** eine Kommunikation zwischen Lastmanagement-Kommunikationsschnittstelle und Netzbetreiber bzw. Verteilnetzbetreiber vorgesehen ist.

10. Verfahren nach einem der vorangehenden Ansprüche, **dadurch gekennzeichnet, daß** eine Kommunikation zwischen Lastmanagement-Kommunikationsschnittstelle und Direktvermarkter vorgesehen ist.

11. Verfahren nach einem der vorangehenden Ansprüche, **dadurch gekennzeichnet, daß** das Lastmanagement über ein offenes Kommunikationsprotokoll, vorzugsweise OCPP (Open Charge Point Protocol) realisiert ist.

12. Verfahren nach einem der vorangehenden Ansprüche, **dadurch gekennzeichnet, daß** Regeleingriffe des Lastmanagements über einen Bypass-Kanal der Kommunikation zwischen Kommunikationsschnittstelle und Verbrauchern bzw. Ladesäulen und/oder der Kommunikation mit dem Verwaltungssystem erfolgen.

13. Verfahren nach einem der vorangehenden Ansprüche, **dadurch gekennzeichnet, daß** für das Lastmanagement Daten zur Energieerzeugung, zur Auslastung des jeweiligen Netzanschlußpunktes und aller relevanten Verbraucher ausgewertet werden.
